# EUROPÄISCHE PATENTSCHRIFT

(11) **EP 1 098 104 B1**
(45) Veröffentlichungstag und Bekanntmachung des Hinweises auf die Patenterteilung: **29.06.2005**
(21) Anmeldenummer: 00122043.3
(22) Anmeldetag: 11.10.2000
(51) Int. Cl.: F16D 69/04, F16D 69/00, B29C 43/36

(54) **Verfahren und Vorrichtung zur Herstellung von Bremsbelägen**
Method and device for producing brake linings
Prodédé et dispositif pour la production de garnitures de frein

(30) Priorität: 06.11.1999 DE 19953438
(43) Veröffentlichungstag der Anmeldung: 09.05.2001
(73) Patentinhaber: TMD Friction EsCo GmbH, 45356 Essen (DE)
(72) Erfinder: Eckert, Armin, Dipl.-Ing., 45731 Waltrop (DE)
(74) Vertreter: Hosbach, Hans Ulrich, Dipl.-Ing.

(56) Entgegenhaltungen:
- EP-A- 0 681 116
- DE-A- 19 519 940
- GB-A- 2 328 640
- US-A- 3 063 363
- PATENT ABSTRACTS OF JAPAN vol. 1998, no. 10, 31. August 1998 (1998-08-31) & JP 10 122284 A (TOKICO LTD), 12. Mai 1998 (1998-05-12)
- PATENT ABSTRACTS OF JAPAN vol. 1998, no. 04, 31. März 1998 (1998-03-31) & JP 09 309121 A (AKEBONO BRAKE RES &DEV CENTER LTD), 2. Dezember 1997 (1997-12-02)
- PATENT ABSTRACTS OF JAPAN vol. 2000, no. 09, 13. Oktober 2000 (2000-10-13) & JP 2000 154838 A (HITACHI CHEM CO LTD), 6. Juni 2000 (2000-06-06)

## Beschreibung

Die Erfindung betrifft eine Vorrichtung zur Herstellung von Bremsbelägen, mit den Merkmalen gemäß dem Oberbegriff des Anspruchs 1.

Bremsbeläge finden in verschiedenen Bereichen, insbesondere in der Fahrzeugindustrie Verwendung und werden daher in entsprechend großen Stückzahlen gefertigt. Übliche Bremsbeläge weisen einen der ausreichenden strukturellen Festigkeit dienenden Trägerteil und einen den Reibbelag bildenden Belagteil auf. Der Trägerteil kann ein Blech- oder Gußteil sein, und das Belagmaterial kann aus einem formbaren Preßgut bestehen. Bei der Herstellung wird das Trägerteil in eine Preßform eingelegt, eine definierte Menge Preßgut in die Form eingeführt und das Preßgut danach mittels eines Preßwerkzeuges unter Einwirkung von Druck und Temperatur mit dem Trägerteil verpreßt. Übliche Belagmassen enthalten Metalle, Füllstoffe, Gleitmittel (feste Schmierstoffe) und organische Bestandteile (Harze, Kautschuk, organische Fasern, organische Füllstoffe). Die Zusammensetzung der Belagmasse ist wesentlich für die Qualitätsmerkmale der fertigen Reibbeläge. Die Belagmassenzusammensetzungen werden auf verschiedene Konstruktions- und Betriebsparameter abgestimmt, wie beispielsweise geometrische Formen des Bremsbelages, dessen gewünschtes Dämpfungsverhalten, die Art des verwendeten Bremssystems und die strukturelle Steifigkeit des Bremssystems. Übliche Preßgutmassen enthalten Phenolharze und Anteile von Wasser und Alkoholen. Aus diesen Preßgutkomponenten bilden sich unter den hohen Drücken und den erhöhten Temperaturen während des Preßvorgangs Gase und Dämpfe, die bisher nur unzureichend entlang des Umfangs des Preßstempels abgeführt werden konnten. Die in der Belagmasse verbleibenden Gas- und Dampfkomponenten führen im fertigen Preßbauteil zu Einschlüssen, welche die Stabilität und die Standfestigkeit des Bremsbelags beeinträchtigen.

Eine Vorrichtung mit einer Abführung von gas- oder dampfförmigen Medien entlang des Umfangs des Preßstempels ist aus der JP 101-22284 A bekannt. Über dem Preßstempel zugeordnete Öffnungen können die gas- oder dampfförmigen Medien zur Umgebungsatmosphäre hin abgeleitet werden. Die Öffnungen befinden sich entlang des Umfangs des Preßstempels oder in einer am Preßstempel angeordneten Schicht.

Die Verwendung einer porösen Schicht ist aus JP-A-09309121 bekannt.

Aus der US-A-3,063,363 ist eine Papierballenpresse bekannt, deren Preßwerkzeug eine ballige Pressfläche und verteilte Luftabzugsöffnungen aufweist.

Eine verbesserte Gas- und Dampfabfuhr aus der Form läßt sich bekanntlich auch dadurch erreichen, daß in das Preßverfahren zusätzliche Entlüftungszyklen eingebunden werden. Der Preßstempel wird mehrfach umgesteuert, wobei gas- und dampfförmige Medien durch den Ringspalt zwischen Preßstempel und Form entweichen können. Die ausreichende Entlüftung bzw. Gas und Dampfabfuhr, verbunden mit mehrfachen Kolbenspielen, erhöhen die Fertigungszeiten. Bei der Serienfertigung von Bremsbelägen führen aber bereits geringfügige Verlängerungen einzelner Teilbearbeitungs- und Taktzeiten zu erheblichen Fertigungsverzögerungen und damit zu entsprechenden Wirtschaftlichkeitseinbußen.

Der Erfindung liegt die Aufgabe zugrunde, bei der Serienfertigung von Bremsbelägen die Abfuhr von Gas und Dampf zu verbessern.

Gelöst wird diese Aufgabe erfindungsgemäß durch die Merkmale gemäß Patentanspruch 1. Durch die erfindungsgemäß vorgesehene Kombination aus der porösen Schicht und der mit mehreren Bohrungen versehenen Druckplatte, können die gas- und dampfförmigen Medien über die mit den Durchgangsöffnungen verbundene Sammelleitung oder -kammer zur Umgebungsatmosphäre hin entweichen, und zwar selbst dann, wenn der Preßvorgang in einem einzigen Preßhub durchgeführt wird. Ein mehrphasiger Preßvorgang zur besseren Verdichtung des Preßguts kann in kürzeren Taktzyklen durchgeführt werden, da die Gas- und Dampfanteile aus der Form gleichmäßig und im wesentlichen ungehindert durch die poröse Schicht und die verteilten Bohrungen in der Druckplatte austreten können. Die poröse Schicht ist so beschaffen, daß sie Preßgutpartikel innerhalb der Preßkammer zurückhält und nur die Gas- und Dampfanteile durchläßt. Im Ergebnis können die Preßzykluszeiten durch die Erfindung um 20 bis 40% verkürzt werden, wobei eine ausgezeichnete Verdichtung der Preßgutpartikel und ein Abführen der sich in dem Forminnenraum bildenden Gas- und Dampfanteile gewährleistet sind. Die Fertigungszeiten können verkürzt und/oder die Homogenität und andere Qualitätsmerkmale der Bremsbeläge durch Vermeidung von Gas- und Dampfeinschlüssen verbessert werden. Auch die Gefahr einer Rißbildung im fertigen Bremsbelag wird reduziert.

Zur besseren Verdichtung des Preßguts während des Preßvorgangs wird der Preßstempel mehrphasig beaufschlagt. Dabei kann der Preßstempel auch abwechselnd zugefahren, hochgefahren und zugefahren werden. Die Taktzeiten bei der Durchführung des erfindungsgemäßen Verfahrens können wesentlich kürzer bemessen werden als bei herkömmlichen Verfahrensführungen; dies liegt vor allem daran, daß die Abfuhr gas- oder dampfförmiger Medien keine zusätzlichen Fertigungszeiten in Anspruch nimmt. Die Dauer der Taktzeiten kann daher ausschließlich nach den Verdichtungseigenschaften der Preßvorrichtung und des körnigen, faserigen oder granulatförmigen Preßguts gewählt werden.

Es hat sich gezeigt, daß Taktzeiten zwischen 50 und 250 Sekunden, vorzugsweise aber zwischen 70 und 140 Sekunden für die Durchführung des erfindungsgemäßen Verfahrens ausreichend sind. Im Zuge eines Preßvorgangs sind beispielsweise zwei bis drei Entlastungszyklen vorgesehen, in denen der Preßstempel entlastet oder abgehoben und danach wieder zugestellt wird. Die gesamte Dauer des Preßvorgangs kann aber auch bei mehrphasigem Zustellen auf ca. 100 Sekunden beschränkt werden.

Vorteilhafte Ausgestaltungen der Erfindung sind in den Unteransprüchen gekennzeichnet.

Im folgenden wird die Erfindung anhand eines in der Zeichnung schematisch dargestellten Ausführungsbeispiels näher erläutert. In der Zeichnung zeigen:
Fig. 1 eine schematische Schnittansicht einer Preßvorrichtung zur Herstellung von Bremsbelägen unmittelbar vor Beginn des Preßvorgangs;
Fig. 2 den Preßstempel der Ausführung gemäß Fig. 1 mit einer porösen Schicht auf der Preßkammerseite.

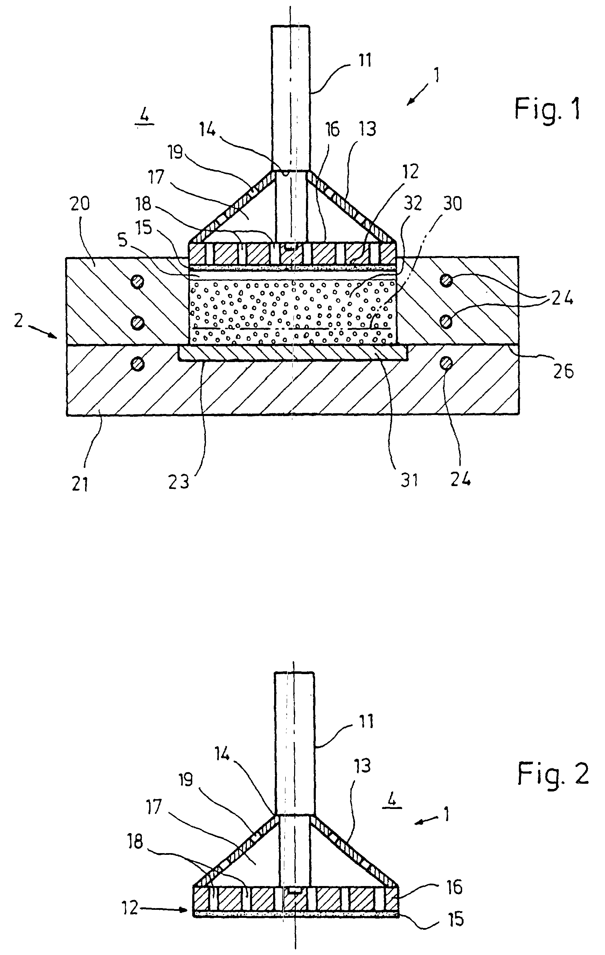

Die in Fig. 1 dargestellte Form weist einen mit 1 bezeichneten Preßstempel und eine zweiteilige Form 2 auf, in der ein Bremsbelag durch Verpressen von körnigem, faserigem und/oder granulatförmigen Preßgut 32 auf einem Belagträger 31 hergestellt wird.

Die Form 2 ist zweiteilig ausgebildet. In dem einen Formteil 21 ist eine Ausnehmung 23 ausgebildet, in die der Belagträger 31 passend eingesetzt ist. Die Teilung 26 zwischen dem erste Formteil 21 und dem zweiten Formteil 20 liegt in der Ebene der der Belagmasse zugewandten Seite des Belagträgers 31. Das zweite Formteil 20 weist eine zylindrische Durchgangsbohrung auf, in der der Preßstempel radial geführt ist und die den Umfang einer Preßkammer 5 begrenzt. Die untere Stirnfläche der Preßgutkammer wird von dem Belagträger 31 gebildet.

Heizmittel sind dem in Fig. 1 dargestellten Ausführungsbeispiel in beiden Teilformen angeordnet und mit 24 bezeichnet. Diese Heizmittel 24 halten oder bringen das in die Preßkammer 5 eingesetzte Preßgut 32 auf der oder die vorgesehene Preßtemperatur im Bereich von 70 bis 200°C vorzugsweise 80 bis 140°C, bevor der Preßstempel zugefahren und das Preßgut 32 verdichtet wird.

Der Preßstempel 1 ist in Fig. 2 schematisch dargestellt. Er weist einen Schaft 11 und eine Stempelplatte 12 auf, die am freien Ende des Stempelschafts 11 mit Hilfe von geeigneten Befestigungsmitteln angeschlossen ist. Die Stempelplatte 12 ist über eine Schürze 13 auf einer Schulter 14 des Stempelschafts 11 abgestützt.

Die Stempelplatte 12 ist bei dem dargestellten Ausführungsbeispiel mehrschichtig ausgebildet. Auf der Preßseite der Stempelplatte ist eine Schicht 15 aus porösem Material angeordnet, die großflächig von einer Druckplatte 16 abgestützt ist. Die Schürze 13 greift im Umfangsbereich der Druckplattenrückseite an und begrenzt eine kegelförmige Sammelkammer 17. Die poröse Schicht 15 hat enge Durchgangsporen, durch die gas- oder dampfförmige Medien zur Druckplattenseite hin durchtreten können. Die Poren sind andererseits so eng bemessen, daß selbst kleine Preßgutpartikel an der Porenschichtoberfläche zurückgehalten werden. In der Druckplatte 16 sind mehrere achsparallele Bohrungen 18 ausgebildet, die die Porenschicht 15 mit der Sammelkammer 17 verbinden. Andererseits sind in der Schürze 13 Durchgangsöffnungen 19 ausgebildet, durch die ein Abführen von gasförmigen Medien aus der Sammelkammer 17 in die Umgebungsatmosphäre stattfinden kann.

Das neue Verfahren zur Herstellung von Bremsbelägen wird im folgenden anhand der schematischen Schnittansicht gemäß Figur 1 näher erläutert.

Der Belagträger 31 wird bei abgehobenen Formteil 20 in die Belagträgerausnehmung 23 eingeführt. Danach wird das Formteil 20 derart in Stellung gebracht, daß die Zylinderkammer 5 mit dem Belagträger 31 ausgerichtet ist. Das körnige, faserige und/oder granulatförmige Preßgut wird danach in die Preßkammer 5 eingefüllt und gegebenenfalls über die Heizmittel 24 aufgeheizt. Danach wird der Preßstempel 1 zugestellt und unter Zwischenschaltung von Entlastungszyklen intermittierend druckbeaufschlagt. Dieses Intermittierende Verpressen führt zu einer vorzüglichen Verdichtung des Preßguts und damit zu einer ausgezeichneten Homogenität des Reibbelags. Dazu trägt vor allem die Tatsache bei, daß das im Preßraum 5 eingeschlossene gas- oder dampfförmige Medium auf der ganzen Preßfläche des Stempels durch die Porenschicht 15 gleichmäßig entweichen kann und in die Umgebungsatmosphäre 4 abgeführt wird. Diese Abfuhr des gas- oder dampfförmigen Mediums aus der Preßkammer 5 ist völlig unabhängig von der Dauer und Anzahl der Entlastungszyklen. Die Entlastungszyklen können daher auf die gewünschten Belageigenschaften und die Zusammensetzung des Preßguts abgestimmt werden. Wie oben gesagt, wird das Preßgut 32 vorzugsweise durch Warmpressen im Bereich von etwa 70 bis 200°C, vorzugsweise zwischen 80 und 140°C verpreßt.

Die in Figur 1 schematisch dargestellte Vorrichtung zur Herstellung von Bremsbelägen kann aber auch in einer von Figur 1 um 180° verdrehten Anordnung betrieben werden (upsidedown). Dabei wird das Formteil 20 am Vorrichtungsgestell befestigt und der Stempel 1 mit der Stempelplatte 12 in der Zylinderöffnung des Formteils 20 von unten versenkt gehalten. Das Preßgut wird von der Seite der Belagträgerplatte 31 zunächst auf die Porenschicht 15 der Stempelplatte 12 aufgeschüttet. Die mit dem Preßgut 32 gefüllte Kammer 5 ist zunächst im Bereich der Teilung 26 zwischen den Formteilen 20 und 21 offen. Die Trägerplatte 31 wird dann im Bereich der Teilung auf die Öffnung der Kammer 5 aufgelegt und Formteil 21 dem Reibbelagträger 31 aufgestülpt. Die Preßhübe über den Stempel 1 erfolgen sodann von unten gegen eine am Maschinengestell festgehaltene Form 2. Der Gegendruck kann über das Formteil 21 aufgebracht werden. Das zunächst lose Preßgut wird am Schluß des mehrphasigen Preßvorgangs bis auf die strichpunktierte Linie 30 verdichtet. Nach dem Öffnen der Form 2 an der Teilung 26 kann das aus Reibbelagträger 31 und verpreßtem Reibbelag 32 bestehende Fertigteil über den Preßstempel 11 ausgestoßen und zur Endfertigung abgeführt werden.

Im Rahmen des Erfindungsgedankens sind zahlreiche Abwandlungen möglich. So kann die in Figur 1 dargestellte Form 2 auch einteilig ausgebildet sein, wenn das Formteil 21 geeignet ausgebildet ist. Außerdem können in der Form 2 mehrere Kammern für mehrere Preßstempel 1 ausgebildet sein. Bei entsprechend fester und steifer Gestaltung der Druckplatte 12 kann auch die Schürze 13 als stabilisierendes Element entfallen. Die Stempelplatte 12 kann auch einschichtig ausgebildet sein, wobei die Schicht selbst als Porenschicht mit durchgängigen Poren oder als geeignete Siebschicht ausgebildet sein kann. Wesentlich ist, daß die Stempelplatte gas- oder dampfförmige Medien möglichst gleichmäßig zur Stempelrückseite hin durchlassen kann, andererseits aber die Preßgutpartikel in der Druckkammer zurückhält.

## Patentansprüche

1. Vorrichtung zur Herstellung von Bremsbelägen mit einer zur Aufnahme wenigstens eines Reibbelagträgers (31) geeigneten Form (2), einem in die Form einführbaren Preßwerkzeug (1), das zusammen mit der Form eine Preßkammer (5) begrenzt, und mit Mitteln zum Abführen von gas- oder dampfförmigen Medien aus der Form (2), wobei die Mittel zum Abführen der gas- oder dampfförmigen Medien eine dem Preßgut (32) zugewandte poröse Schicht (15) des Preßwerkzeugs (1) aufweisen, die so ausgebildet ist, daß sie für gas- und dampfförmige Medien durchlässig, aber sowohl für Preßgutpartikel als auch für Staub undurchlässig ist; und wobei die poröse Schicht (15) auf ihrer dem Preßgut (32) abgewandten Seite an einer Druckplatte (16) gehaltert ist, die mit Mitteln zum Abführen der aus der porösen Schicht (15) austretenden gas- oder dampfförmigen Medien versehen ist,
**dadurch gekennzeichnet,**
**daß** die Mittel zum Abführen der aus der porösen Schicht (15) austretenden gas- oder dampfförmigen Medien mehrere Bohrungen (18) sind, die über wenigstens eine Sammelleitung oder -kammer (17) mit einer (der) Rückseite des Preßwerkzeug (1) verbunden sind.

2. Vorrichtung nach Anspruch 1, **dadurch gekennzeichnet, daß** die Durchgangsöffnungen im wesentlichen gleichmäßig über die Preßwand (15) verteilte Poren sind.

## Claims

1. Apparatus for producing brake linings comprising a mould (2) adapted to receive at least one friction lining support, a pressing tool (1) which can be introduced into the mould and which together with the mould defines a pressing chamber (5), and further comprising means for drawing off gaseous or vaporous media from the mould (2), wherein the means for drawing off the gaseous or vaporous media have a porous layer (15) of the pressing tool (1) which faces the material to be pressed (32) and which is constructed in such a way that it is permeable to gaseous and vaporous media but is impermeable not only to particles of material to be pressed but also to dust, and wherein the porous layer (15) on its side facing away from the material to be pressed (32) is retained on a pressure plate (16) which is provided with means for drawing off the gaseous or vaporous media coming out of the porous layer (15), **characterised in that** the means for drawing off the gaseous or vaporous media coming out of the porous layer (15) are a plurality of holes which are connected to a (the) rear face of the pressing tool (1) by way of at least one collecting pipe or chamber (17).

2. Apparatus as claimed in Claim 1, **characterised in that** the through openings are pores which are distributed substantially uniformly over the pressing wall (15).

## Revendications

1. Dispositif pour la fabrication de garnitures de frein comprenant un moule (2) capable de recevoir au moins un porte-garniture de friction (31), un outil de compression (1) pouvant être introduit dans ce moule et qui délimite avec celui-ci une chambre de compression (5), et des moyens d'évacuation du moule (2) des matières gazeuses ou sous forme de vapeur, les moyens d'évacuation des matières gazeuses ou sous forme de vapeur présentant une couche poreuse (15) de l'outil de compression (1) dirigée vers la matière à comprimer (32) et perméable aux matières gazeuses et sous forme de vapeur, mais imperméable aux particules de matière à comprimer et à la poussière, et la couche poreuse (15) étant supportée sur son côté opposé à la matière à comprimer (32) par une plaque de pression (16) qui est pourvue de moyens d'évacuation des matières gazeuses ou sous forme de vapeur qui sortent de la couche poreuse (15),
**caractérisé par le fait**
**que** les moyens d'évacuation des matières gazeuses ou sous forme de vapeur qui sortent de la couche poreuse (15) sont plusieurs trous (18) qui sont reliés par au moins une conduite ou une chambre collectrice (17) à un (au) côté arrière de l'outil de compression (1).

2. Dispositif selon la revendication 1, **caractérisé par le fait que** les ouvertures de passage sont des pores répartis sensiblement uniformément sur la paroi de compression (15).
